# EUROPEAN PATENT APPLICATION

(11) **EP 2 530 804 A1**
(43) Date of publication of application: **05.12.2012**
(21) Application number: 11168340.5
(22) Date of filing: 01.06.2011
(51) Int. Cl.: H02J 3/18, G01R 31/08, H02H 9/08

(54) **Improved ground fault handling in power distribution systems with mixed underground and aerial power lines**

(71) Applicant: ABB Research Ltd., 8050 Zürich (CH)
(72) Inventor: Reza, Muhamad, SE-723 44 Västerås (SE); Hultqvist, Lars, SE-722 24 Västerås (SE); Rivas, Richard, SE-723 46 Västerås (SE); Silversten, Bo, SE-723 48 VÄSTERÅS (SE)
(74) Representative: Ahrengart, Kenneth

(57) **Abstract**

The present invention relates to a a power transmission and/or distribution system (10) comprising a power grid (G), a first power transmission section (12) and a ground fault handling device (GHR) for connecting the grid to the first section, where the first section (12) is of a first type including at least one underground power line. The ground fault handling device comprises a first isolating transformer (IT1) having a first set of windings and a second set of windings, where the first set is coupled to the gird, the second set is coupled to the first section and the windings of the second set are solidly or resistively (R1, R3, R4, R5) grounded. There is also at least one grounding transformer (GT1, GT2, GT3) shunt connected between an isolating transformer of a ground fault handling device and a power transmission section.

## Description

### FIELD OF THE INVENTION

The present invention is generally directed towards a ground fault handling device for a first type of power transmission section in a power transmission and/or distribution system as well as to such a power transmission and/or distribution system.

### BACKGROUND

Customers of Medium Voltage (MV) rural distribution systems are usually served by power lines in the form of overhead lines (OHLs). However, to reduce the amount of outages, especially under adverse weather conditions, countries as Sweden, Denmark, France, the Netherlands, Italy and Germany have been replacing MV aerial lines with power lines in underground cables.

Nowadays, the situation in Europe is that MV substations (11-22 kV) either in urban or rural areas serve underground and aerial feeders, and that each feeder can be totally underground, totally aerial, or a combination of aerial and underground sections.

An important concern, nonetheless, is that the common practices employed in the design of aerial feeders are not necessarily effective when applied onto a system where at least some power lines are provided in underground cables, i.e. the network is mixed. The type of ground fault handling to use is one practice that can have a significant influence on the overall performance of the system.

On the one hand, classical OHLs have the following characteristics:
- Most faults are transient and single-phase-to-ground.
- Voltage gradient hazards and arc flash hazards must be minimized given the possibility of having faulted conductors lying on the ground. In particular, the personnel and final users may be exposed to electric shock when approaching the downed wires.

On the other hand, cable systems have the following characteristics:
- All of the faults are permanent (non transient).
- A faulted feeder must always be tripped to locate the fault and repair it.
- In case of fault, accidents for arc flashes and/or high voltage gradients are unlikely since the cables are buried. The interconnections with other power components are also completely sealed and insulated.

There is thus a problem in how to handle faults in a system having a mixture of overhead and underground power lines.

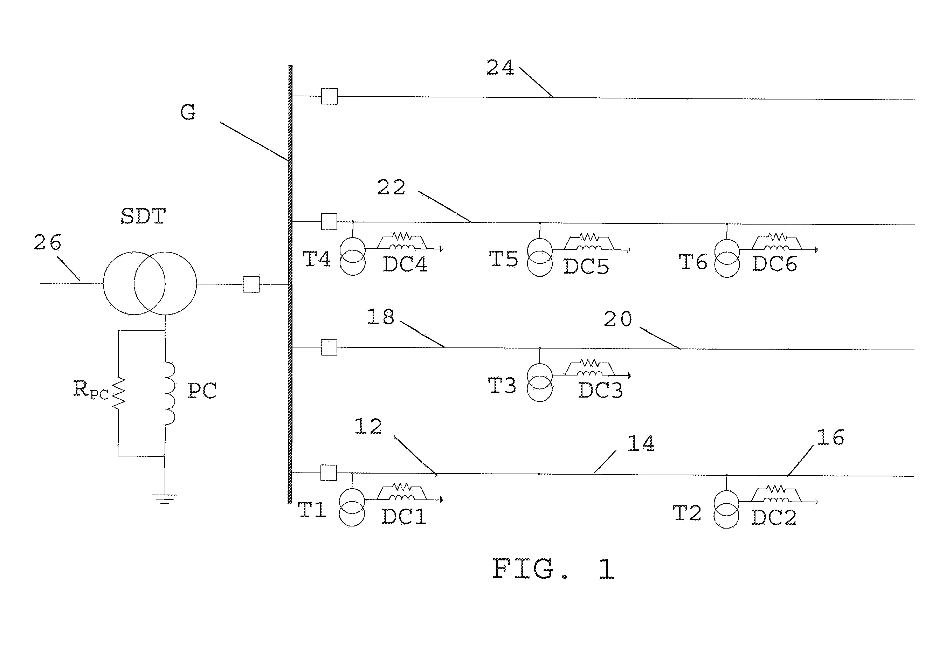

The traditional way of handling ground faults in such mixed systems will now be described with reference being made to fig. 1, which shows a power line 26 of a high voltage (HV) power transmission system being connected to the grid G of a medium voltage (MV) power distribution system via a step down or high voltage/medium voltage (HV/MV) transformer SDT, which is a delta-wye connected three phase transformer. The neutral point of the secondary side of this transformer SDT, i.e. the MV side of the transformer, is coupled to ground using a Petersen coil PC, where a resistance R_{PC} is connected in parallel with this Petersen coil. This coil is here variable, while the resistor is typically fixed to give a maximum current, for instance of 5 A at bolted ground fault. The step down transformer SDT is typically provided in a substation of the MV power distribution system.

The MV system here includes a mixture of aerial and underground power lines. Therefore there is a first feeder, which first feeder comprises a first, second and third power line 12, 14 and 16, where the first power line 12 is at one end connected to the grid G and at an opposing second end to a first end of the second power line 14, while a second end of the second power line 14 is connected to a third power line 16. The first and third power lines 12 and 16 are here provided in the form of underground cables, while the second power line 14 is provided in the form of an aerial power line.

There is also a second feeder, which second feeder comprises a fourth and a fifth power line 18 and 20. Here a first end of the fourth power line 18 is connected to the grid G, while a second end of the fourth power line 18 is connected to the fifth power line 20. Here the fourth power line 18 is provided as an overhead power line, while the fifth power line 20 is provided as an underground cable.

There is also a third and a fourth feeder connected to the grid G, where the fourth feeder is made up of a sixth power line 22 and the fourth feeder is made up of a seventh power line 24. Here the sixth power line 22 is provided in the form of an underground cable, while the seventh power line 24 is provided in the form of an overhead or aerial power line.

A number of distributed compensation circuits DC1, DC2, DC3, DC4, DC5 and DC6 are provided in relation to and along the underground cables. There is here a first compensation circuit DC1 at the connection of the first end of the first power line 12 to the grid G, a second compensation circuit DC2 at the connection of the third power line 16 to the second power line 14 and a third compensation circuit DC3 at the connection of the fifth power line 20 to the fourth power line 18. Finally there is a fourth, fifth and sixth compensation circuit DC4, DC5 and DC6 provided along the sixth power line 22, where the fourth compensations circuit DC4 is provided at the connection to the grid G. These compensation circuits are then provided at fixed distances along the underground cables. Each such compensation circuit includes a local coil, which is here connected in parallel with a local resistor. Each of these compensation circuits is connected to the corresponding power line via a grounding transformer T1, T2, T3, T4, T5 and T6. This means that the primary winding of the transformer is connected to the power line, while the secondary winding may be connected to ground. The neutral point of the primary side is furthermore connected to ground via the compensation circuit.

In the system in fig. 1 an MV substation serves the load of different radial feeders through the high voltage/medium voltage (HV/MV) transformer SDT with the Petersen coil PC. Here it should be mentioned that if the transformer SDT is delta-connected also on the secondary side an additional grounding transformer could be provided, via which the Petersen coil is connected to ground. As can be seen some feeders are totally aerial and some are totally underground, but many feeders comprise combinations, i.e. a mix, of aerial and underground power lines.

The system in fig. 1 provides the mixed overhead/underground system with ground fault handling through the Petersen coil PC in the MV substation combined with smaller coils in the distribution circuits DC1, DC2, DC3, DC4, DC5 and DC6 throughout the underground cable sections of the feeders, specifically at the transformation points from MV to low voltage (LV). The smaller coils compensate the cable capacitances thus allowing the adjustment (tuning) of the Petersen coil in the MV substation.

The type of ground fault handling provided by the system shown in fig. 1 is for instance known through the thesis named "Analysmodell för impedansjordat system med lokal kompensering" by Gunilla Brännman, University of Trollhättan/Uddevalla, Sweden, Oct 21, 2003.

Similar systems are described in EP1684394, EP 1684395 and US 2006/0279884.

The idea of the above-mentioned known solution is to assist the Petersen coil in the MV substation by connecting distributed compensation circuits DC1, DC2, DC3, DC4, DC5 and DC6 having smaller coils throughout the feeders with cable sections.

However, the use of this type of ground fault handling causes a number of new problems and difficulties.

This known ground fault handling requires the installation of the smaller coils at fixed distances. However, transformation points are not always available at these fixed points. There is therefore a risk of over- or under compensation and the existing transformation equipment may have to be replaced (to accommodate the coils) with self-protected transformers (which can be provided with built-in Petersen coils), or with larger power transformers able to handle the energy required by the coils. Moreover, the longer the cable feeders, the higher will the number of smaller coils be, and the more expensive the solution will become. Another problem is that the small distributed three-phase shunt reactors will continuously consume power. There are thus also power losses in such a system.

It is also a common practice to keep the underground sections of the feeders under-compensated. Therefore another disadvantage of the system in fig. 1 is that the reactive component of the ground fault current becomes much larger than the resistive component. As a result, the angle error of the fault current increases noticeably and it turns out to be much more difficult for protective units, such as protective relays (directional relays) in the MV substation to detect the fault or operate selectively.

In addition, the system in fig. 1 is prone to the development of intermittent faults in the underground sections of the feeders. The low values of current magnitude and time duration associated with the intermittent faults makes it difficult for protective relays to detect the problem and trip a faulted feeder. Fault location efforts can also face difficulties and unnecessary delays when the faulted point has not been burned down (and it is not visible) by the fault current. The immediate consequences are loss of power quality and complaints from costumers. High transient over-voltages can be present during intermittent faults, so the risk of causing cross-country faults (faults at different points of the feeder) is also higher.

The present invention is directed towards solving some or all of the above mentioned problems.

### SUMMARY OF THE INVENTION

The present invention addresses some or all of the above mentioned problems. The invention is thus directed towards providing improved ground fault handling in power transmission or distribution systems having one or more power transmission sections with power lines in the form of underground cables.

This is according to the invention solved through a power transmission and/or distribution system comprising a power grid, at least one power transmission section of a first type and a first ground fault handling device for said section, said power transmission section of the first type including at least one underground power line,
- said first ground fault handling device comprising a first isolating transformer having a first set of windings including at least one winding and a second set of windings including at least one winding, said second set of windings being coupled to a power transmission section of the first type and said first set of windings being connected to the power grid for providing an interface between the power grid and the first power transmission section,
- wherein the windings of the second set of windings are solidly or resistively grounded, and the system further comprising at least one grounding transformer shunt connected between an isolating transformer of a ground fault handling device and a power transmission section.

The expression coupled is intended to cover both direct and indirect connections between two entities.

The present invention has a number of advantages. It isolates underground sections from other sections of a power transmission and/or distribution system in that the use of Petersen coils is avoided in the underground sections, it raises ground fault currents in the underground sections to levels high enough for their detection and location, it removes problems of high angle errors when detecting faults in the underground sections and it minimizes the possibility of causing intermittent faults in the underground sections. It furthermore avoids using small distributed three-phase shunt reactors in the system, which avoids unnecessary power losses and improves efficiency. When resistive grounding is used the invention furthermore keeps ground fault currents low enough so that significant reductions of voltage gradients at the faulted points are achieved. Through the use of grounding transformers it is further possible to further reduce ground fault currents when there are long underground cables and/or provide fault current detection in case of load side changes.

### BRIEF DESCRIPTION OF THE DRAWINGS

Fig. 1 schematically shows the known power distribution system with a mixture of aerial and underground power lines,
Fig. 2 schematically shows a power distribution system according to a first embodiment of the invention, and
Fig. 3 schematically shows a zig-zag connected three-phase grounding transformer with inductive neutral grounding.

### DESCRIPTION OF PREFERRED EMBODIMENTS

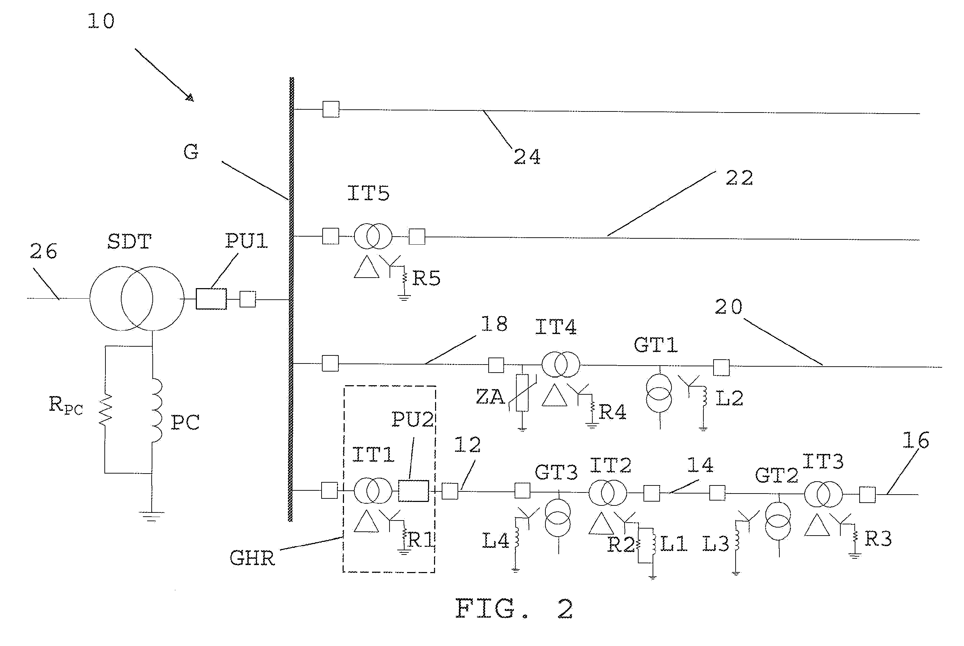

The invention will now be described with reference being made to fig. 2, which shows a power distribution system according to a first embodiment of the invention.

In fig. 2 there is a power line 26 of a high voltage power transmission system being connected to the grid G of a medium voltage power distribution system 10 via a step down or high voltage/medium voltage (HV/MV) transformer SDT, which is a delta-wye connected three phase transformer. The step down transformer SDT has a first set of primary windings, including at least one winding and a second set of windings including at least one winding. The high voltage power line 26 is here connected to the first set of windings or the primary side of the step-down transformer SDT, while the second set of windings or secondary side of the step down transformer SDT is coupled to the grid G of the medium voltage power distribution system 10 via a protective unit PU1. The step down transformer SDT in this way provides an interface of the system 10 to the high voltage power transmission system with the power line 26. The neutral point of the secondary side of this transformer SDT is connected to ground via a Petersen coil PC, where a resistor R_{PC} is connected in parallel with this Petersen coil. In this embodiment the Petersen coil is variable. However, it should be known that it may have a fixed value. It should here also be realized that the resistor may be omitted in some variations of the invention. The step down transformer and the protective unit PU1 is normally provided in a substation of the MV system 10. The step down transformer SDT is with advantage a three-phase transformer.

In this first embodiment of the invention, the MV system 10 includes a number of power transmission sections. A first type of power transmission section is here one having power lines provided as underground cables, a second type of power transmission section is one which has power lines in the form of aerial or overhead power lines. The second type of section here lack underground power lines. The MV system 10 therefore comprises a mixture of aerial or overhead and underground power lines in various power transmission sections. More particularly, in the system there is a first feeder, which first feeder comprises a first, second and third power transmission section 12, 14 and 16, where the first power transmission section 12 is at a first end coupled to the first power transmission section, i.e. to the grid G, and at an opposing second end to a first end of the second power transmission section 14, while a second end of the second power transmission section 14 is coupled to a first end of the third power transmission section 16. The first and third power transmission sections 12 and 16 are here of the first type, i.e. provided in the form of underground cables, while the second power transmission section 14 is of the second type, i.e. provided in the form of an aerial or overhead power line.

There is also a second feeder, which second feeder comprises a fourth and a fifth power transmission section 18 and 20. Here a first end of the fourth power transmission section 18 is coupled to the grid G, while a second end of the fourth power transmission section 18 is coupled to the fifth power transmission section 20. Here the fourth power transmission section 18 is of the second type, i.e. provided in the form of an overhead power line, while the fifth power transmission section 20 is of the first type, i.e. provided in the form of an underground cable. The fifth power transmission section 20 is furthermore long and here longer than 3 km. The length of an underground cable where a grounding transformer may be needed may more particularly be more than 3 km for 20-kV cables and more than 4 km for 10-kV cables. This distance is determined through a calculation based on a maximum capacitive ground fault current of 30 A, cable cross-section of 2000 mm² and frequency of 50 Hz. However, a grounding transformer may be needed for other lengths depending on voltage level, system frequency and customer safety requirements.

There is also a third and a fourth feeder coupled to the grid G, where the fourth feeder is solely made up of a sixth power transmission section 22 and the fourth feeder is solely made up of a seventh power transmission section 24. Here the sixth power transmission section 22 is of the first type, while the seventh power transmission section 24 is of the second type.

It should be realized that the system in fig. 2 is only exemplifying and provided in order to give an understanding of various power transmission section combinations that can exist in a mixed MV system according to the invention. The combinations of power lines and sections in feeders as well as the number of feeders can be changed in countless ways.

So far the electric distribution system described is the same as the known distribution system. However, according to the first embodiment of the present invention each power transmission section of the first type is connected either to the grid G or to a neighbouring power transmission section of the second type via a self-protected isolating transformer IT. There is thus a first isolating transformer IT1 connected between the grid G and the first end of the first power transmission section 12, a second isolating transformer IT2 connected between the second end of the first power transmission section 12 and the first end of the second power transmission section 14 and an isolating transformer IT3 connected between the second end of the second power transmission section 14 and the first end of the the third power transmission section 16. The first isolating transformer IT1 has a first set of primary windings, including at least one winding, and a second set of windings including at least one winding. The grid G is here connected to the first set of windings or the primary side of the first isolating transformer IT1, while the second set of windings or secondary side of the isolating transformer IT1 is connected to the first end of the first power transmission section via a protective unit PU2. The first isolating transformer together with protective unit PU2 here forms a ground fault handling device GHR for the first power transmission section 12. They also provide an interface between two power transmission sections.

The second isolating transformer IT2 forms a second ground fault handling device and similarly has a first set of primary windings, including at least one winding, and a second set of windings, including at least one winding. The second end of the first power transmission section 12 is here connected to the first set of windings or the primary side of the second isolating transformer IT2, while the second set of windings or secondary side of the second isolating transformer is connected to the first end of the second power transmission section 14. The primary side of the third isolating transformer IT3 is in the same way connected to the second side of the second power transmission section 14 and the secondary side of the third isolating transformer IT3 is connected to the first end of the third power transmission section 16. The protective unit PU2 may here include ground fault detection functionality and circuit breaker control functionality. It may also include a circuit breaker. It will however normally not include any circuit breaker reclosing control functionality, since ground faults are normally permanent in the underground cable. It should here be realized that protective units may also be provided in relation to the second and third isolating transformers. However, they have here been omitted in order to provide a clearer description of the invention.

In the same way there is a fourth isolating transformer IT4 having a primary side connected to the fourth power transmission section 18 and a secondary side connected to the fifth power transmission section 20. There is also a fifth isolating transformer IT5 connected between the grid G and a first end of the sixth power transmission section 22. Here the primary side of the fifth isolating transformer IT5 is connected to the grid G, while the secondary side of this transformer is connected to the sixth power transmission section 22. Also here isolation transformers may be equipped with protective units.

All the isolating transformers are with advantage three-phase transformers. In this embodiment they are also all delta-wye connected. The isolation enables ground faults occurring in separate sections to be isolated from each other and can therefore be treated separately.

In order to be able to treat ground faults of an isolated section of the first type, a ground fault handling device that forms an interface between the first type of power transmission section and another type of power transmission section can have the neutral point of the set of windings connected to the first type of section coupled to ground. This coupling could be a solid grounding, i.e. a direct connection to ground, or a resistive grounding, i.e. a connection to ground via a resistor. The other side of the section in question may also be provided with an isolating transformer, but then the side of this transformer facing the section of the first type will not have any neutral point grounding. From a control perspective it is then often of advantage that a ground fault handling device is provided as close to the grid as possible. However, this is no requirement.

The sides of isolating transformers connected to an end of the first type of power transmission section facing the grid or the high voltage side can thus have the above mentioned types of neutral point grounding. In the first embodiment of the invention the first, third, fourth and fifth isolating transformers IT1, IT3, IT4 and IT5 consequently have the neutral points of the secondary sides coupled to ground. This coupling to ground could be done using a grounding resistor or through a direct ground connection. The type of grounding selected is normally made in dependence of the practices employed by the utility, the length of the feeder and/or the desired magnitude of fault current. In the first embodiment of the invention the first, third, fourth and fifth isolating transformers IT1, IT3, IT4 and IT5 are coupled to ground via a corresponding ground fault reducing resistor R1, R3, R4 and R5.

In order to be able to treat ground faults of an isolated section of the second type, i.e. a section including overhead power lines that is isolated from the grid, the isolating transformer connecting this second type of power transmission section with another type of power transmission section can have the neutral point of the set of windings connected to this second type of section resonance-grounded, i.e. grounded via a reactive element like a coil.

Also this isolating transformer is with advantage provided as close to the grid as possible. Power transmission sections of the second type of the system 10, i.e. aerial or overhead sections, being isolated from the grid in this way, such as the second power transmission section 14 of the first feeder, could because of this isolation need to be provided with its own ground fault handling equipment. Therefore an isolating transformer separating one such "isolated" overhead section from an underground section can have the side facing the overhead section coupled to ground via a Petersen coil, perhaps in parallel with a resistor to improve fault detection. As an example of this the second isolating transformer IT2 that connects the second end of the first power transmission section 12 with the first end of the second power transmission section 14 has its secondary side coupled to ground via such a Petersen coil L1, here also denied a first coil, where a resistor R2 is connected in parallel with this first coil L1. It should be realized that also here there may be a protective unit connected between such a transformer and the section of the second type, although none is shown in fig. 2.

For mixed networks the ground fault handling according to the first embodiment of the invention therefore involves a conventional Petersen coil PC connected to the neutral point of the HV/MV transformer SDT together with distributed delta-wye isolation transformers IT. These transformers IT1, IT2, IT3, IT4, IT5, typically have a 1:1 transforming ability. These transformers isolate the aerial sections from the underground sections and therefore they decouple the zero sequence currents of the aerial sections from those of the underground sections. The ground faults in sections of the second type directly connected to the grid G, like the seventh power transmission section 24, can then be detected and removed using the Petersen coil PC and the protective unit PU1. The protective unit PU1 may here be provided in the form of a distance or directional relay and include ground fault detection functionality and circuit breaker control functionality including circuit breaker reclosing control functionality. Actual circuit breakers being controlled by the protective unit PU1 are then normally provided in or in relation to a feeder.

In fig. 2 there are also shown a number of grounding transformers GT1, GT2 and GT3. A first grounding transformer GT1 is here shunt connected between the secondary side of the fourth isolating transformer IT4 and the fifth power transmission section 20. The first grounding transformer GT1 is furthermore connected to the secondary side of the fourth isolating transformer IT4, the primary side of which is coupled to the grid. A second grounding transformer GT2 is connected to the first set of windings or primary side of the third isolating transformer IT3, while a fourth isolating transformer is connected to the first set of windings or primary side of the second isolating transformer IT2. The second and the third grounding transformers GT2 and GT3 are thus connected to the primary sides of corresponding isolating transformers, which primary sides are coupled to the power grid. All these transformers are shunt connected and furthermore also wye connected and the neutral point of them are coupled or connected to ground via a respective coil L2, L3 and L4. The neutral point of the first grounding transformer GT1 is therefore connected to ground via a second coil L2, the neutral point of the second grounding transformer GT2 is connected to ground via a third coil L3 and the neutral point of the third grounding transformer GT3 is connected to ground via a third coil L3.

In fig. 2 there is finally an electrical transient protection element ZA connected between the first set of windings of fourth isolating transformer IT4 and ground, i.e. between the primary side of the fourth isolating transformer and ground. The electrical transient protection element is thus shunt connected and may be provided through a surge arrester, which may be a varistor.

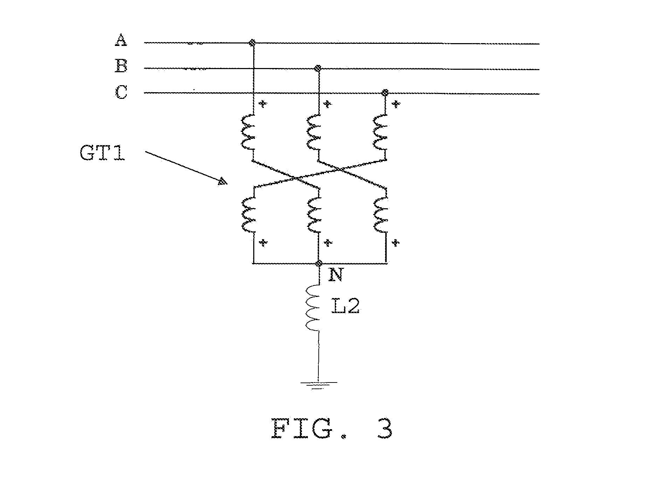

The grounding transformers are further zig-zag connected, which is exemplified for the first grounding transformer in fig. 3.

When the isolating transformers that interface the power transmission sections of the first type have their neutral points solidly-grounded high fault currents are obtained. When they are resistively grounded as in fig. 2, for instance high-resistance grounded, fault currents are reduced to levels slightly higher than those of the capacitive ground fault currents of these cable sections.

When the isolating transformers interfacing the power transmission sections of the second type have their neutral points resonant-grounded, for instance grounded via a Petersen coil L1 like the transformer IT2 in fig. 2, aerial type of ground fault reduction is obtained. An additional resistor R2 may or may not be connected in parallel with the coil in order to improve fault detection.

Protective units, such as the protective unit PU2 in fig. 2, which may include a circuit breaker and/or an over-current relay, is provided at the side of the isolation transformer being grounded, i.e. at the side facing the section for which the ground protection is to be applied and here at the side of the isolation transformer facing away from the grid G, in order to detect and disconnect downstream faults.

All these measures have the following advantages. When there are ground faults in the cable sections, the faults are not "seen" by the protective unit PU1 in the MV substation as the isolation transformers are delta-connected. Instead, these ground faults are detected and removed by protective units PU2 associated with the isolation transformers. In addition, ground fault currents in the cable sections are seen as low-current two-phase faults by both the fuses of the isolation transformers and the protective unit in the MV substation. Therefore, loss of selectivity is unlikely.

As mentioned, if grounding resistors are connected to the neutral points the ground fault currents are limited and therefore the voltage gradients at the faulted points are also limited. It is expected that the cable sections will be shorter than those of a purely underground network, so ground fault currents and voltage gradients should diminish noticeably with resistively grounded isolation transformers.

When there are ground faults in the aerial sections, these are compensated by the central Petersen coil PC for the sections of the second type that are directly connected to the grid G and by the local Petersen coils L1 for the isolated sections. These coils will in most cases suppress (quench) the electric arc and reestablish normal operating conditions. In addition, the protective unit PU1 in the MV substation will "see" the ground faults, i.e. possible ground faults in the fourth and seventh power transmission sections 18 and 24, without the significant angle errors present in mixed systems that lack isolated power transmission sections, as zero-sequence reactive current contributions from the underground (cable) sections will have been isolated. In the same manner the protective unit PU2 for an isolated underground power transmission section will be able to "see" and act on ground faults in this section.

As opposed to the prior art ground fault handling in the system of fig. 1, the ground fault handling according to the first embodiment of the invention allows the mixed network to keep the benefits provided by Petersen coils, i.e. arc suppression, fast recovery of normal operating conditions, and low voltage gradients in the faulted aerial sections, regardless of the existing interconnection with underground sections. This is combined with an improved ground fault handling in the underground sections. Another advantage is that the small distributed three-phase shunt reactors are omitted, which avoids unnecessary power losses and improves efficiency.

The ground fault handling according to the first embodiment of the invention therefore differs from the known ground fault handling through:
1) keeping the existing Petersen coil located in the MV substation, but only to reduce the ground fault current in the aerial sections of the feeders, where most faults are transient,
2) avoiding the use of Petersen coils in the underground sections of the feeders, where faults are always permanent,
3) raising ground fault currents in the underground sections of the feeders to levels high enough for their detection and location,
4) removing problems of high angle errors when detecting faults in the underground sections,
5) minimizing the possibility of causing intermittent faults in the underground sections of the feeders, and
6) keeping ground fault currents low enough so that significant reductions of voltage gradients at the faulted points are achieved.

The decoupling of the zero-sequence reactive current contributions from the aerial and underground sections of the feeder through isolation transformers has the advantage that the presence of underground cables neither reduces the effectiveness of the Petersen coil to clear ground faults in the aerial sections nor increases the size of the coil required in the MV substation.

The first grounding transformer GT1, which is connected to the load side of the fourth isolating transformer IT4 here has the function to reduce the fault current in the long fifth power transmission section 20, which is of the first type i.e. in the form of an underground cable, which in this case is also a long underground cable.

It is furthermore possible that a system as the one shown in fig. 2 may be reconfigured, for instance because maintenance has to be performed. Such a reconfiguration may as an example lead to the sixth power transmission section 22 being joined to the third power transmission section 16. This joining would then typically be through a second end of the sixth power transmissions section being joined to a second end of the third power transmission section 16. This may also involve disconnecting the second power transmissions section from the grid G, for instance using a circuit breaker between the first power transmission section 12 and the first ground fault handling device GHR. This type of reconfiguration would lead to the delta connected primary sides of the third and second isolating transformers IT3 and IT2 becoming load sides instead of source sides. This type of change of load side could also occur if the system was ring connected. Through the addition of these grounding transformers GT2 and GT3 to the delta-connected load sides of the isolating transformers IT3 and IT2, it is possible for over current protection elements and circuit breakers provided on the delta connected primary sides to detect and clear ground faults on the delta connected primary side.

The functioning of the electrical transient protection element ZA is to protect the associated isolating transformer IT4 from electrical transients.

It should here be realized that as an alternative, this electrical transient protection element could be connected to the secondary side of the fourth isolating transformer IT4. As yet another alternative it is possible that there is an additional electrical transient protection element connected to the secondary side of the fourth isolation transformer IT4.

It should also be realized that more isolating transformers than the ones described above may be equipped with grounding transformers and/or electrical transient protection elements in the same way as was described above. However, a grounding transformer connected to the secondary side, i.e. connected to the secondary side of a corresponding isolating transformer, the primary side of which is coupled to the power grid, would normally only be provided in relation to a long power transmission section of the first type connected to the secondary side.

The system according to the present invention may with advantage be used in MV rural or urban networks, particularly in those cases where the feeders combine underground and aerial sections.

The isolating transformers have been described as being self-protected 1-to-1 transformers. However, it should be realized that it is possible that they may be step-down transformers instead, for instance if the electric utility operates at different MV levels.

The invention has a number of further advantages. Electric utilities are interested in keeping the existing transformation equipment when replacing rural overhead lines with underground cables. The replacement of transformation equipment to accommodate distributed compensation or have more compensation power in a MV substation is expensive. The ground fault handling scheme according to the invention allows such replacements to be avoided.

The installation of a few isolation transformers and circuit breakers can be more cost effective than the installation of many self-protected transformers with built-in Petersen coils. Ground fault detection and disconnection also becomes selective and more reliable.

The protective units have been described as being provided together with an isolating transformer with or without grounding resistors or with or without Petersen coils. It should however be realized that the protecting units may be placed at other locations in the system.

## Claims

1. Power transmission and/or distribution system (10) comprising a power grid (G), at least one first power transmission section (12, 16, 20, 22) of a first type and a first ground fault handling device (GHR) for said section, said power transmission sections of the first type including at least one underground power line,
- said first ground fault handling device comprising a first isolating transformer (IT1) having a first set of windings including at least one winding and a second set of windings including at least one winding, said second set of windings being coupled to a power transmission section (12) of the first type and said first set of windings being connected to the power grid (G) for providing an interface between the power grid and the first power transmission section,
- wherein the windings of the second set of windings are solidly or resistively (Rl, R3, R4, R5) grounded, and
- the system further comprising at least one grounding transformer (IT6, IT7, ITS) shunt connected between an isolating transformer of a ground fault handling device and a power transmission section.

2. A system according to claim 1, wherein the grounding transformer is wye-connected.

3. The system according to claim 2, wherein the neutral point of the grounding transformer is coupled to ground via a coil (L2, L3, L4).

4. A system according to claim 1, wherein a neutral point of the second set of windings of the first isolating transformer is coupled to ground.

5. A system according to claim 1 or 2, wherein the first isolating transformer is a delta-wye connected three-phase transformer.

6. A system according to any of claims 1 - 3, further comprising a protective unit (PU2) connected between an isolating transformer (IT1) isolating a power transmission section (12) of the first type and this power transmission section of the first type.
7 - 10,.

7. A system according to any previous claim, further comprising at least one second power transmission section (14) of a second type lacking underground power lines but having overhead power lines and a second ground fault handling device for connecting said first section to said second section, said second ground fault handling device comprising a second isolating transformer (IT2) having a first set of windings including at least one winding and a second set of windings including at least one winding, said first set of windings being coupled to said first section and said second set of windings being coupled to said second section.

8. A system according to claim 6, wherein the windings of the second set of windings of the second isolating transformer are resonant-grounded.

9. A system according to claim 7, wherein the second set of windings of the second isolating transformer has a neutral point connected to ground via a first coil (L1).

10. A system according to claim 8, further comprising a resistor (R2) in parallel with said coil.

11. A system according to claim 8 or 9, wherein the coil is variable.

12. A system according to any of claims 12 - 16, wherein the second isolating transformer is a delta-wye connected three-phase transformer.

13. A system according to any of claims 11 - 19, further comprising a third transformer (SDT) providing a system interface and having a first set of windings including at least one winding and a second set of windings including at least one winding, where the first set of windings is connected to another power transmission and/or distribution system (26) and the second set of windings is connected to the power grid (G).

14. A system according to claim 20, wherein the second set of windings of the third transformer has a neutral point coupled to ground via a Petersen coil (PC).

15. A system according to claim 21, wherein a variable resistor (R_{PC}) is coupled in parallel with the Petersen coil.

16. A system according to any previous claim, wherein one grounding transformer (GT1) is connected to the secondary side of an isolating transformer (IT4), the primary side of which is coupled to the power grid, and said secondary side being connected to a power transmission section (20) of the first type.

17. The system according to claim 19, wherein said power transmissions section (20) of the first type has a length exceeding 3 km.

18. The system according to any previous claim, further comprising a grounding transformer (GT2, GT3) connected to the primary side of an isolating transformer (IT3, IT2), said primary side being coupled to the power grid (G).

19. The system according to any previous claim, further comprising at least one electrical transient protection element (ZA) connected between one set of windings of an isolating transformer (IT4) and ground.
